# EUROPÄISCHE PATENTSCHRIFT

(11) **EP 1 591 196 B1**
(45) Veröffentlichungstag und Bekanntmachung des Hinweises auf die Patenterteilung: **27.12.2006**
(21) Anmeldenummer: 05005766.0
(22) Anmeldetag: 16.03.2005
(51) Int. Cl.: B23Q 17/24

(54) **Verfahren zur Vermessung eines Werkzeugs einer Werkzeugmaschine**
Method of measuring a tool of a machine tool
Méthode pour mesurer l' outil d'une machine-outil

(30) Priorität: 30.04.2004 DE 102004021254
(43) Veröffentlichungstag der Anmeldung: 02.11.2005
(73) Patentinhaber: P & L GmbH & Co. KG, 20148 Hamburg (DE)
(72) Erfinder: Röders, Jürgen, 20148 Hamburg (DE); Eglins, Frank, 21077 Hamburg (DE)
(74) Vertreter: Weber, Joachim

(56) Entgegenhaltungen:
- EP-A- 0 834 378
- DE-A1- 3 701 124
- DE-A1- 19 828 897
- GB-A- 1 290 360
- NL-C2- 1 018 943
- US-A- 4 869 813
- US-A- 5 655 354
- US-A- 5 825 017

## Beschreibung

Die Erfindung bezieht sich auf ein Verfahren gemäß dem Oberbegriff des Hauptanspruchs, das aus dem Dokument EP 0 834 378 A bekannt ist.

Im Einzelnen bezieht sich die Erfindung auf ein Verfahren zur Vermessung eines Werkzeugs einer Werkzeugmaschine, bei welchem das Werkzeug mittels einer Lasermessvorrichtung vermessen wird.

In Werkzeugmaschinen werden Laserlichtschranken eingesetzt, um die eingesetzten Bearbeitungswerkzeuge zu vermessen. Üblicher Weise werden die Länge, der Durchmesser und/oder die Geometrie des Bearbeitungswerkzeuges gemessen. Dazu bewegt die Maschine das Werkzeug in Richtung der Laserlichtschranke, bis diese durch das Bearbeitungswerkzeug unterbrochen wird und erfasst so das gewünschte Maß des Bearbeitungswerkzeuges. Bei rotierenden Bearbeitungswerkzeugen, z.B. bei Fräsmaschinen, rotiert das Werkzeug auch während der Messung. So wird der durch die Rotation des Bearbeitungswerkzeuges entstehende Hüllkörper erfasst.

Während der Bearbeitung auf der Werkzeugmaschine werden üblicher Weise Schmierstoffe, Emulsionen oder auch Öle, teilweise auch als Ölnebelschmierung, eingesetzt. Diese benetzen das Werkstück und das Bearbeitungswerkzeug, um den Zerspanungsvorgang zu verbessern. Nach der Bearbeitung bleiben Reste des eingesetzten Schmierstoffes auf dem Bearbeitungswerkzeug haften. Das ist selbst dann der Fall, wenn das Bearbeitungswerkzeug mit sehr hohen Drehzahlen eingesetzt wird. Die Oberflächenspannung des Schmierstoffes verhindert, dass sich dieser vom Bearbeitungswerkzeug löst.

Moderne Werkzeugmaschinen verfügen über ein Werkzeugmagazin, aus dem sich die Maschine das für einen Bearbeitungsgang erforderliche Bearbeitungswerkzeug holt. Anschließend erfolgt die Lasermessung, insbesondere, wenn es sich nicht um voreingestellte Bearbeitungswerkzeuge handelt. Nach der Bearbeitung wird das Bearbeitungswerkzeug wieder in das Magazin zurückgebracht, nachdem gegebenenfalls mit dem Laser zuvor eine Bruch- und/oder Verschleißkontrolle durchgeführt wurde.

Wird ein Bearbeitungswerkzeug für mehrere Bearbeitungen eingesetzt, so wird es üblicher Weise vor jedem Arbeitsgang erneut vermessen. Das erhöht die Genauigkeit der Bearbeitung, da auf diese Weise direkt vor der Bearbeitung eine erneute Messung erfolgt und nicht auf die Daten einer älteren Messung zurückgegriffen werden muss.

Wenn ein Bearbeitungswerkzeug vermessen wird, das bereits im Einsatz war, dann ist dessen Oberfläche noch mit einem Schmierstoff benetzt. Dieser führt bei der Lasermessung auf Grund von optischen Effekten zu einer erhöhten Streuung der Messwerte und damit zu größerer Meßungenauigkeit und -unsicherheit. Um diesen Effekt zu vermindern, wird in vielen Werkzeugmaschinen das Bearbeitungswerkzeug vor der Lasermessung mit einer Druckluftdüse an- bzw. abgeblasen. Diese Druckluftbeaufschlagung des Werkzeugs führt jedoch nicht bei allen Anwendungsfällen zu befriedigenden Ergebnissen, sodass die Lasermessung weiterhin vielfach fehlerbehaftet ist.

Der Erfindung liegt die Aufgabe zugrunde, ein Verfahren der eingangs genannten Art zu schaffen, welches bei einfachem Aufbau und einfacher, betriebssicherer Anwendbarkeit unter Vermeidung der Nachteile des Standes der Technik eine fehlerfreie Vermessung des Werkzeugs ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass das Werkzeug vor der Laservermessung mit einem öl- bzw. fettlösenden Mittel besprüht wird.

Das erfindungsgemäße Verfahren zeichnet sich durch eine Reihe erheblicher Vorteile aus. Durch die Besprühung des Werkzeugs mit einem öl- bzw. fettlösenden Mittel wird die Oberflächenspannung des Schmierstoffs, der Emulsion, des Öls oder der bei einer Ölnebelschmierung aufgebrachten Substanzen herabgesetzt. Hierdurch können diese Mittel von dem Werkzeug entfernt werden, sodass kein Oberflächenfilm mehr vorhanden ist, der die Lasermessung stört. Hierdurch erhöht sich die Messsicherheit ganz erheblich. Messfehler, die durch die Schmierstoffe, Emulsion, Öle etc., hervorgerufen wurden, können auf sichere Weise vermieden werden.

Bevorzugter Weise wird als öl- bzw. fettlösendes Mittel ein Reinigungsmittel aufgesprüht. Es ist jedoch auch möglich, ein Lösungsmittel oder Ähnliches zu verwenden. Erfindungsgemäß wichtig ist dabei, dass die Oberflächenspannung des Öl- oder Schmierfilms entsprechend herabgesetzt wird, sodass sich dieser von dem Werkzeug lösen kann.

Besonders vorteilhaft ist es, wenn das öl- bzw. fettlösende Mittel unter Druck auf das Werkzeug gesprüht wird. Dies kann beispielsweise mittels Druckluft erfolgen. Hierdurch wird sichergestellt, dass das Reinigungs- oder Lösungsmittel zuverlässig auf die Oberfläche des Werkzeugs aufgebracht wird.

Besonders vorteilhaft ist es, dass das Werkzeug bei der Aufsprühung des öl- bzw. fettlösenden Mittels mit einer reduzierten Drehzahl rotiert. Weiterhin ist es vorteilhaft, dass das Werkzeug nach der Aufsprühung des öl- bzw. fettlösenden Mittels mit einer erhöhten Drehzahl gedreht wird. Zur Reduzierung der Drehzahl kann es ausreichend sein, den Antrieb der Spindel, welche das Werkzeug lagert, über einen vorgegebenen Zeitraum, beispielsweise 8 bis 10 Sekunden, abzuschalten. Die Spindeldrehzahl erniedrigt sich dann durch das Auslaufen der Spindel von selbst. Nach dem Besprühen kann dann der Antrieb wieder eingeschaltet werden, wobei sich beispielsweise eine Drehzahl von 30.000 min⁻¹ oder mehr als günstig erweist. Es wird somit vermieden, dass während des Sprühvorgangs eine zu hohe Rotationsgeschwindigkeit des Werkzeugs das Aufbringen des Reinigungsmittels oder des Lösungsmittels verhindert. Dies könnte beispielsweise durch einen Luftkegel oder einen Luftfilm auf der Oberfläche des Werkzeugs erfolgen, der den Sprühvorgang beeinträchtigt. Durch das Absenken der Drehzahl des Werkzeugs wird dieser Effekt vermieden.

Die Erhöhung der Drehzahl nach dem Besprühen führt dazu, dass die Partikel des Reinigungsmittels oder Lösungsmittels sich von dem Werkzeug lösen. Dieser Effekt wird auch durch die Druckluft-Beaufschlagung des Reinigungsmittels oder Lösungsmittels bewirkt bzw. verstärkt. Insgesamt können sich somit kombinierte positive Effekte ergeben.

Nach dem Besprühen und der Erhöhung der Drehzahl wird das öl- bzw. fettlösende Mittel (Reinigungsmittel, Lösungsmittel) binnen kurzer Zeit auf der Oberfläche des Werkzeugs verdunsten. Die Oberfläche des Werkzeugs ist somit trocken und schmierfilmfrei, sodass die nachfolgende Lasermessung fehlerfrei ohne unerwünschte optische Effekte erfolgen kann.

Als Reinigungsmittel oder Lösungsmittel kann beispielsweise CALLINA 2201 der Shell Macron GmbH verwendet werden. Es handelt sich hierbei um einen Kaltreiniger bzw. einen auf ausgewählten Isoparaffinen basierenden Kohlenwasserstoffreiniger. Dieser reinigt gründlich von öligen Bearbeitungsrückständen sowie von Schmutz und ist insbesondere bei wassergemischten Kühlschmierstoffen einsetzbar.

Im Folgenden wird die Erfindung anhand schematischer Darstellungen verdeutlicht. Dabei zeigt:
- Fig. 1: eine schematische Darstellung einer Lasermesseinrichtung, und
- Fig. 2: eine schematische Darstellung der Aufbringung des öl- bzw. fettlösenden Mittels auf das Werkzeug.

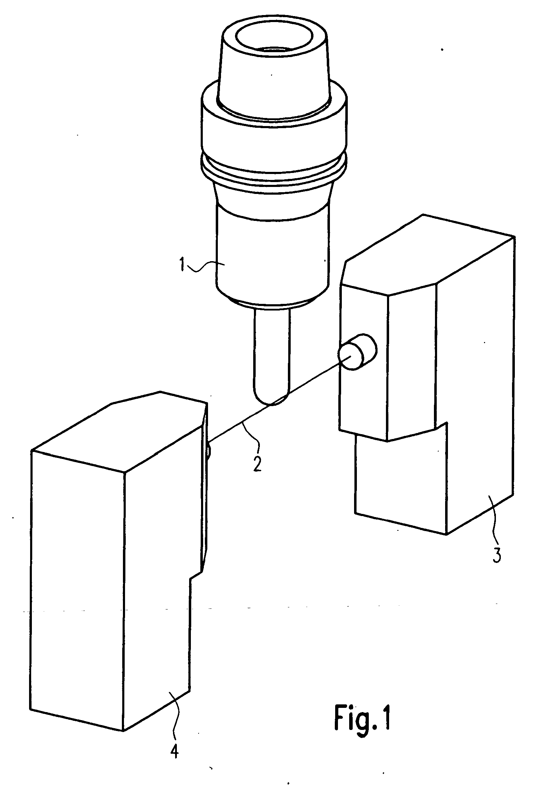

Die Fig. 1 zeigt in sehr schematischer Darstellung ein Werkzeug 1, welches nur durch seine Hüllkurve dargestellt ist und hinsichtlich seines Aufbaus aus dem Stand der Technik bekannt ist. Das Werkzeug 1 wird mittels eines Laserstrahls 2 einer Lasermesseinrichtung abgetastet (Sender 3 und Empfänger 4).

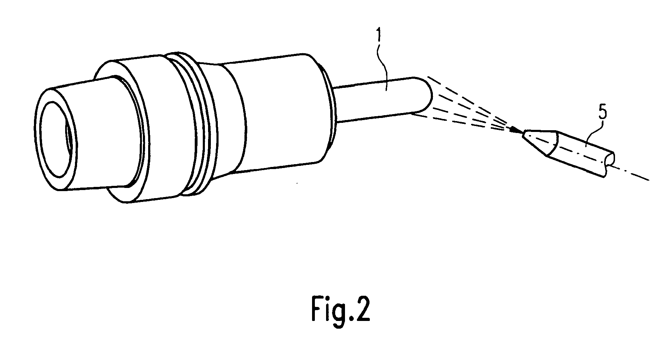

Die Fig. 2 zeigt in schematischer Darstellung eine Düse 5, aus welcher ein öl- bzw. fettlösendes Mittel (Reinigungsmittel, Lösungsmittel) auf das Werkzeug 1 aufgesprüht wird.

Das erfindungsgemäße Verfahren kann bei jeder Bearbeitungsmaschine oder Werkzeugmaschine angewandt werden, bei welcher eine Vermessung eines Werkzeugs stattfindet. Dabei ist die Vermessung des Werkzeugs nicht auf eine Lasermesseinrichtung beschränkt.. Vielmehr können auch andere optische Messverfahren angewandt werden. Es ist auch möglich, das erfindungsgemäße Verfahren bei sonstigen berührenden Messverfahren oder weiteren berührungslosen Messverfahren anzuwenden.

Weiterhin kann das erfindungsgemäße Verfahren automatisiert eingesetzt werden, entweder bei jeder Vermessung eines Werkzeugs oder nur bei vorgegebenen Messvorgängen.

## Patentansprüche

1. Verfahren zur Vermessung eines Werkzeugs (1) einer Werkzeugmaschine, wobei das Werkzeug (1) mittels einer Lasermessvorrichtung (2, 3, 4) vermessen wird, **dadurch gekennzeichnet, dass** das Werkzeug (1) vor der Laservermessung mit einem öl- bzw. fettlösenden Mittel besprüht wird, wobei das Werkzeug (1) bei der Aufsprühung des öl- bzw. fettlösenden Mittels mit einer reduzierten Drehzahl und nach der Aufsprühung des öl- bzw. fettlösenden Mittels mit einer erhöhten Drehzahl rotiert.

2. Verfahren nach Anspruch 1, **dadurch gekennzeichnet, dass** als öl- bzw. fettlösendes Mittel ein Reinigungsmittel verwendet wird.

3. Verfahren nach Anspruch 1, **dadurch gekennzeichnet, dass** als öl- bzw. fettlösendes Mittel ein Lösungsmittel verwendet wird.

4. Verfahren nach einem der Ansprüche 1 bis 3, **dadurch gekennzeichnet, dass** das öl- bzw. fettlösende Mittel unter Druck auf das Werkzeug 1 gesprüht wird.

5. Verfahren nach einem der Ansprüche 1 bis 4, **dadurch gekennzeichnet, dass** das öl- bzw. fettlösende Mittel mit Druckluft auf das Werkzeug gesprüht wird.

## Claims

1. Method for measuring a tool (1) of a machine tool, wherein the tool (1) is measured by means of a laser measuring device (2, 3, 4), **characterized in that** before the laser measurement the tool (1) is sprayed with an oil- or grease-dissolving agent, the tool (1) being rotated at a reduced speed of rotation during spraying on of the oil- or grease-dissolving agent and at an increased speed of rotation after spraying on of the oil- or grease-dissolving agent.

2. Method according to claim 1, **characterized in that** a cleaning agent is used as the oil- or grease-dissolving agent.

3. Method according to claim 1, **characterized in that** a solvent is used as the oil- or grease-dissolving agent.

4. Method according to one of claims 1 to 3, **characterized in that** the oil- or grease-dissolving agent is sprayed on to the tool 1 under pressure.

5. Method according to one of claims 1 to 4, **characterized in that** the oil- or grease-dissolving agent is sprayed on to the tool with compressed air.

## Revendications

1. Procédé de mesure de l'outil (1) d'une machine-outil, l'outil (1) étant mesuré à l'aide d'un dispositif de mesure au laser (2, 3, 4), **caractérisé en ce que** l'outil (1), avant que la mesure ne soit effectuée, est pulvérisé avec un produit dissolvant l'huile ou la graisse, l'outil (1), lors de la pulvérisation du produit dissolvant l'huile ou la graisse, tournant à vitesse réduite et, à l'issue de la pulvérisation, tournant à une vitesse plus élevée.

2. Procédé selon la revendication 1, **caractérisé en ce qu'**un produit nettoyant est utilisé comme produit dissolvant l'huile ou la graisse.

3. Procédé selon la revendication 1, **caractérisé en ce qu'**un solvant est utilisé comme produit dissolvant l'huile ou la graisse.

4. Procédé selon l'une des revendications 1 à 3, **caractérisé en ce que** le produit dissolvant l'huile ou la graisse est pulvérisé sous pression sur l'outil (1).

5. Procédé selon l'une des revendications 1 à 4, **caractérisé en ce que** le produit dissolvant l'huile ou la graisse est pulvérisé sur l'outil à l'aide d'air comprimé.
